# EUROPÄISCHE PATENTSCHRIFT

(11) **EP 3 499 088 B1**
(45) Veröffentlichungstag und Bekanntmachung des Hinweises auf die Patenterteilung: **01.07.2020**
(21) Anmeldenummer: 17207313.2
(22) Anmeldetag: 14.12.2017
(51) Int. Cl.: F16H 3/00, F16H 61/04, F16H 61/688, F16H 3/12

(54) **GETRIEBE FÜR EIN KRAFTFAHRZEUG, UND VERFAHREN ZUM BETRIEB EINES SOLCHEN GETRIEBES**
TRANSMISSION FOR A MOTOR VEHICLE AND METHOD FOR OPERATING SUCH A TRANSMISSION
BOÎTE DE VITESSES DE VÉHICULE AUTOMOBILE ET PROCÉDÉ DE FONCTIONNEMENT D'UNE TELLE BOÎTE DE VITESSES

(43) Veröffentlichungstag der Anmeldung: 19.06.2019
(73) Patentinhaber: ZF Friedrichshafen AG, 88046 Friedrichshafen (DE)
(72) Erfinder: Reisch, Matthias, 88214 Ravensburg (DE); Wendzel, Andreas, 88287 Grünkraut (DE); Stoelcker, Gregor, 13467 Berlin (DE)
(74) Vertreter: ZF Friedrichshafen AG

(56) Entgegenhaltungen:
- EP-A2- 1 400 731
- WO-A1-03/083325
- DE-A1- 4 436 526
- DE-A1- 10 239 540

## Beschreibung

Die Erfindung betrifft ein Getriebe für ein Kraftfahrzeug, beispielsweise ein Doppelkupplungsgetriebe, sowie ein Verfahren zum Betrieb eines solchen Getriebes. Die Erfindung betrifft ferner einen Kraftfahrzeug-Antriebsstrang mit einem solchen Getriebe, sowie eine Steuereinheit zur Steuerung des vorgenannten Verfahrens.

Die Patentanmeldung DE 102 25 331 A1 beschreibt ein Lastschaltgetriebe mit einer Zentralsynchronisierung. Das Lastschaltgetriebe weist zwei Eingangswellen, eine Vorgelegewelle und eine Nebenwelle auf. Zur zentralen Synchronisierung der als unsynchronisiert ausgeführten Schaltelemente sind zwei Synchronelemente vorgesehen, welche auf der Nebenwelle angeordnet ist. Die zwei Synchronelemente sind zur Herstellung einer Drehmomentübertragung zwischen den Eingangswellen vorgesehen. Die Drehmomentübertragung zwischen der Nebenwelle und den Eingangswellen erfolgt über Zahnradpaarungen, welche an der Gangbildung des Lastschaltgetriebes beteiligte Zahnräder nutzen. Durch Ansteuerung der Synchronelemente kann eine Synchronisierung der Schaltelemente sowohl bei einem Hochschaltvorgang als auch bei einem Rückschaltvorgang durchgeführt werden.

Die Patentanmeldung AT 511 631 A1 beschreibt ein Doppelkupplungsgetriebe mit mehreren schaltbaren Gangstufen. Darin ist eine Bremseinrichtung zur Verbindung einer ersten und einer zweiten Eingangswelle des Doppelkupplungsgetriebes vorgesehen, welche als Zentralsynchronisationseinrichtung für die beiden Eingangswellen wirkt. Dazu wird die zu synchronisierende Eingangswelle durch Betätigung der Bremseinrichtung abgebremst, bis diese die zum Einlegen einer höheren Gangstufe nötige Synchrondrehzahl erreicht. Nach Erreichen der Synchrondrehzahl wird die Bremseinrichtung wieder deaktiviert.

Die im vorgenannten Stand der Technik beschriebenen Zentralsynchronisierungen dienen ausschließlich der Synchronisierung, und erhöhen im Vergleich zur herkömmlichen Sperrsynchronisierungseinrichtungen sowohl den Bauaufwand als auch den Steuerungsaufwand des Getriebes. Es ist Aufgabe der Erfindung einen zusätzlichen Nutzen derartiger Einrichtungen bereitzustellen.

Die Aufgabe wird gelöst durch die Merkmale des Patentanspruchs 1. Die Aufgabe wird ferner gelöst durch die Merkmale des Patentanspruchs 5. Vorteilhafte Ausgestaltungen ergeben sich aus den Unteransprüchen, der Beschreibung sowie aus den Figuren.

Es wird ein Getriebe für ein Kraftfahrzeug vorgeschlagen, welches eine Antriebswelle, eine erste und eine zweite Eingangskupplung, eine erste und einer zweite Eingangswelle, eine Mehrzahl von Schaltkupplungen sowie eine Abtriebswelle umfasst. Durch Schließen der ersten Eingangskupplung ist die Antriebswelle mit der ersten Eingangswelle verbindbar. Durch Schließen der zweiten Eingangskupplung ist die Antriebswelle mit der zweiten Eingangswelle verbindbar. Durch selektives Schließen der Schaltkupplungen und der Eingangskupplungen sind verschiedene Gänge zwischen der Antriebswelle und der Abtriebswelle darstellbar. Ferner ist zumindest ein erster schaltbarer Drehmomentübertragungspfad zwischen den beiden Eingangswellen vorgesehen. Zur Herstellung der Drehmomentübertragung umfasst der Drehmomentübertragungspfad eine reibschlüssige Kupplung. Dabei handelt es sich ausdrücklich nicht um eine der beiden Eingangskupplungen.

Erfindungsgemäß ist ein Übersetzungsverhältnis des ersten Drehmomentübertragungspfads zwischen den Eingangswellen größer als der größte Stufensprung zwischen zwei in einer Gangreihe benachbarten Gängen gleicher Drehrichtung. Unter "Stufensprung" wird das Verhältnis zwischen den Übersetzungsverhältnissen zweier Gangstufen verstanden. Der Begriff "Gangreihe" kennzeichnet die Reihenfolge der Gänge entsprechend ihrer Übersetzungsverhältnisse. In der Gangreihe benachbarte Gänge sind beispielsweise der erste Gang und der zweite Gang; bzw. der zweite Gang und der dritte Gang, etc.

Der Erfindung liegt die Kenntnis zu Grunde, dass die bei einem Gangwechsel oder Gangeinlegen erforderliche Kraft, um eine Schaltkupplung zu öffnen und/oder zu schließen, häufig nicht unerheblich ist. Sind die Eingangskupplungen beispielsweise als nasslaufende Lamellenkupplungen ausgebildet, so weisen diese besonders bei kaltem, zähflüssigem Öl auch im geöffneten Zustand ein hohes Schleppmoment auf.

Ist die für einen Gangwechsel zu schließende Schaltkupplung beispielsweise als formschlüssige Kupplung ausgebildet, so muss das vorgenannte Schleppmoment zum Auflösen einer Zahn-auf-Zahn-Stellung überwunden werden. Bei einer geschlossenen Schaltkupplung führt das Schleppmoment zu einem Drehmoment zwischen den Hälften der Schaltkupplung, welche das Öffnen derselben erschweren kann. Das Schleppmoment wird durch Reibung in den Lagerstellen und an Dichtungen weiter erhöht. All dies erhöht eine zur Betätigung, also zum Öffnen oder Schließen der Schaltkupplung erforderliche Betätigungskraft. Auch die zur Verzögerung oder Beschleunigung der beim Schaltvorgang beteiligten Massenträgheiten kann die erforderliche Betätigungskraft der jeweiligen Schaltkupplung erhöhen.

Für einen erfolgreichen Synchronisiervorgang bei einem Gangwechsel zwischen in der Gangreihe benachbarten Gängen muss das Übersetzungsverhältnis des Drehmomentübertragungspfades nur gleich groß oder geringfügig kleiner sein als der Stufensprung zwischen diesen beiden Gängen. Durch die erfindungsgemäße Auslegung des Übersetzungsverhältnisses des Drehmomentübertragungspfads kann die zur Betätigung der jeweiligen Schaltkupplung erforderliche Kraft deutlich reduziert werden, da über den Drehmomentübertragungspfad ein von einer Eingangswelle zur anderen Eingangswelle vergrößertes Drehmoment übertragen werden kann. Dieses vergrößerte Drehmoment ermöglicht eine vollständige oder teilweise Kompensation des Schleppmoments, welches auf die zu öffnende oder zu schließende Schaltkupplung wirkt. Dadurch kann eine maximale Betätigungskraft einer Aktuatorik zum Betätigen der Schaltkupplung reduziert werden, sodass dieser kleiner und leichter ausgestaltet werden kann. Ein solcher Vorgang ist unabhängig von einer Synchronisierung der Drehzahlen zwischen den Eingangswellen, und geht somit über die im Stand der Technik bekannte Verwendung einer solchen Zentralsynchronisierung hinaus.

Vorzugsweise weist das Getriebe einen zweiten schaltbaren Drehmomentübertragungspfad zwischen den beiden Eingangswellen auf. Zur Herstellung der Drehmomentübertragung umfasst der zweite Drehmomentübertragungspfad eine weitere reibschlüssige Kupplung. Dabei handelt es sich ausdrücklich nicht um eine der beiden Eingangskupplungen. Das Übersetzungsverhältnis des zweiten Drehmomentübertragungspfads ist ebenso größer als der größte Stufensprung zwischen zwei in der Gangreihe benachbarten Gängen gleicher Drehrichtung. Gänge gleicher Drehrichtung bezeichnen Gänge, bei denen Antriebswelle und Abtriebswelle die gleiche Drehrichtung aufweisen.

Der zweite Drehmomentübertragungspfad ermöglicht das Aufbringen eines Drehmoments auf die zu betätigende Schaltkupplung mit einem gegenüber dem ersten Drehmomentübertragungspfad unterschiedlichen Vorzeichen. In anderen Worten kann beispielsweise das auf die Schaltkupplung wirkende Drehmoment mittels des ersten Drehmomentübertragungspfads verringert, und mittels des zweiten Drehmomentübertragungspfads erhöht werden. Dadurch kann die maximale Betätigungskraft der Aktuatorik zum Betätigen der jeweiligen Schaltkupplung auch dann reduziert werden, wenn die auf diese Schaltkupplung wirkenden Lastrichtungen unterschiedlich sind.

Bei Vergleich der Übersetzungsverhältnisse der beiden Drehmomentübertragungspfade ist die jeweilige Lastrichtung zu beachten. In anderen Worten ist das Übersetzungsverhältnis des ersten Drehmomentübertragungspfads beispielsweise durch das Übersetzungsverhältnis zwischen erster und zweiter Eingangswelle zu bestimmen, und das Übersetzungsverhältnis des zweiten Drehmomentübertragungspfads durch das Übersetzungsverhältnis zwischen zweiter und erster Eingangswelle.

Vorzugsweise sind zumindest ein Teil der Schaltkupplungen des Getriebes als unsynchronisierte, formschlüssige Schaltelemente ausgebildet. Bei derartigen Schaltkupplungen ist eine weitgehende Reduktion des übertragenen Drehmoments Bedingung für ein Öffnen, bzw. Schließen derselben. Eine Reduktion des übertragenen Drehmoments mittels der ersten oder des zweiten Drehmomentübertragungspfads ist für derartige Schaltelemente daher besonders hilfreich.

Das Getriebe kann Bestandteil eines Antriebsstrangs für ein Kraftfahrzeug sein. Der Antriebsstrang weist neben dem Getriebe auch einen Verbrennungsmotor auf, welcher mit der Antriebswelle verbunden, oder über eine Trennkupplung verbindbar sein kann. Zwischen Verbrennungsmotor und Antriebswelle können Vorrichtungen zur Reduzierung von Drehschwingungen vorgesehen sein, beispielsweise ein Drehschwingungsdämpfer und/oder ein Drehschwingungstilger. Die Abtriebswelle des Getriebes kann mit einem getriebe-internen oder getriebe-externen Differentialgetriebe wirkverbunden sein, welches mit Rädern des Kraftfahrzeugs wirkverbunden ist. Das Getriebe kann eine elektrische Maschine aufweisen, welche zum Antrieb des Kraftfahrzeugs mit der Antriebswelle, einer der Eingangswellen oder der Abtriebswelle verbunden ist.

Das gegenständliche Getriebe ist für einen Antriebsstrang mit zumindest einer elektrischen Maschine besonders geeignet, und zwar unabhängig davon ob die elektrische Maschine Bestandteil des Getriebes ist oder nicht. Denn soll mittels der elektrischen Maschine im Schubbetrieb rekuperiert werden, so sollen auch Schubrückschaltungen ohne wesentliche Unterbrechung des Leistungsflusses zwischen Abtriebswelle und elektrischer Maschine erfolgen. Soll die Schubrückschaltung durch überschneidendes Öffnen und Schließen der Eingangskupplungen erfolgen, so ist für das vorhergehende Einlegen der Schaltkupplungen eine besonders leistungsfähige Synchronisierung von Vorteil, insbesondere wenn die elektrische Maschine mit der Antriebswelle verbunden ist.

Ferner wird ein Verfahren zur Steuerung eines Getriebes angegeben, dessen Aufbau dem zuvor beschriebenen Getriebe im Wesentlichen entspricht. Dabei wird gleichzeitig zu einer Ansteuerung der Aktuatorik zum Öffnen zumindest einer der Schaltkupplungen die reibschlüssige Kupplung des ersten Drehmomentübertragungspfads betätigt, um die Schaltkupplung zumindest teilweise zu entlasten. Umfasst das Getriebe gegebenenfalls auch den zweiten Drehmomentübertragungspfad, so kann - abhängig von der erforderlichen Lastrichtung zur Entlastung der Schaltkupplung - die reibschlüssige Kupplung des zweiten Drehmomentübertragungspfads gleichzeitig zur Ansteuerung der Aktuatorik zum Öffnen dieser Schaltkupplung betätigt werden, um die Schaltkupplung zumindest teilweise zu entlasten.

Unter "gleichzeitig" ist eine zeitliche Überschneidung der aktiven Drehmomentübertragung des ersten, bzw. zweiten Drehmomentübertragungspfads und der Aktuatorik-Ansteuerung zum Öffnen der Schaltkupplung zu verstehen. Diese beiden Tätigkeiten müssen daher nicht gleichzeitig beginnen oder gleichzeitig enden, sondern lediglich zumindest zeitweise gleichzeitig ablaufen. Dadurch kann der Öffnungsvorgang der Schaltkupplung entsprechend unterstützt werden.

Vorzugsweise wird die reibschlüssige Kupplung des ersten oder zweiten Drehmomentübertragungspfads derart betätigt, dass die zu öffnende Schaltkupplung lastfrei wird. Dadurch kann der Kraftbedarf der Aktuatorik zum Öffnen der Schaltkupplung auf ein Minimum reduziert werden.

Gemäß einer bevorzugten Ausgestaltung wird die reibschlüssige Kupplung des ersten oder zweiten Drehmomentübertragungspfads nicht nur gleichzeitig zum Öffnen, sondern auch gleichzeitig zum Schließen zumindest einer der Schaltkupplungen betätigt. Denn auch für den Schließvorgang ist eine Reduktion des auf die Schaltkupplung wirkendenden Drehmoments von Vorteil.

Vorzugsweise wird das Drehmoment, welches von der reibschlüssigen Kupplung des ersten oder zweiten Drehmomentübertragungspfades zur zumindest teilweisen Entlastung der Schaltkupplung übertragen wird, aus einem Kennfeld bestimmt. Dazu kann beispielweise eine Steuereinheit vorgesehen sein, auf der das Kennfeld gespeichert ist. Vorzugsweise definiert das Kennfeld für jede Betätigungsanforderung aller oder ausgewählter Schaltkupplungen einen bestimmten Drehmomentbetrag und gegebenenfalls eine Vorgabe, mittels welcher der reibschlüssigen Kupplungen dieser Drehmomentbetrag umzusetzen ist. Eine entsprechende Aktuatorik steht mit der Elektronikeinheit in Kommunikationsverbindung und betätigt die erste, bzw. die zweite reibschlüssige Kupplung in entsprechender Weise.

Das Kennfeld kann experimentell ermittelt werden, beispielsweise an einem Prüfstand. Zusätzlich oder alternativ dazu kann das Kennfeld anhand eines Prüflaufs nach Fertigung des Getriebes erstellt, bzw. adaptiert werden. Dadurch können während der Fertigung des Getriebes unvermeidliche Streuungen berücksichtigt werden. Im Kennfeld können verschiedene Parameter berücksichtigt werden, welche einen Einfluss auf die Entlastung der Schaltkupplungen haben, darunter beispielsweise eine Drehzahl, eine Öltemperatur und das Vorhandensein einer Ölzufuhr zur Kühlung einer der Eingangskupplungen.

Vorzugsweise wird das Kennfeld während des Betriebs des Getriebes adaptiert. Unter einer "Adaption" wird hierbei das Berücksichtigen veränderlicher Parameter in der Ansteuerung der ersten und/oder zweiten reibschlüssigen Kupplung verstanden. Beispielsweise kann nach einem Öffnungsvorgang einer Schaltkupplung, welcher durch Ansteuerung einer der Drehmomentübertragungspfade unterstützt wurde, die Drehmomentübertragung dieses Drehmomentübertragungspfads aufrechterhalten werden. Dies führt zu einer messbaren Drehzahlveränderung einer der Eingangswellen, welche von einer Massenträgheit dieser Eingangswelle und der entsprechend gekoppelten Elemente abhängig ist. Ist diese Massenträgheit bekannt, so kann die gemessene Drehzahlveränderung mit einer erwarteten Drehzahlveränderung verglichen werden, und ein entsprechender Korrekturfaktor zur Veränderung der bisher im Kennfeld hinterlegten Werte gebildet werden.

Besonders bevorzugt erfolgt die Adaption des Kennfelds außerhalb von Schaltvorgängen des Getriebes. Beispielsweise kann eine der reibschlüssigen Kupplungen derart angesteuert werden, dass sich - ohne Vorliegen einer Schaltanforderung - bei einer der Schaltkupplungen eine Differenzdrehzahl von Null ergibt. Ergänzend oder alternativ dazu kann eine der reibschlüssigen Kupplungen derart angesteuert werden, dass sich - ohne Vorliegen einer Schaltanforderung -eine konstante Drehzahl einer der Eingangswellen ergibt. Die zur Erreichung eines oder beider dieser Zustände erforderliche Ansteuerung der reibschlüssigen Kupplung wird gegebenenfalls um dynamische Effekte wie Anteil der Massenträgheit und vorliegender Abtriebswellen-Beschleunigung bereinigt. Daraus kann ein Korrekturfaktor zur Veränderung der bisher im Kennfeld vorhandenen Werte ermittelt werden.

Gemäß einer bevorzugten Ausgestaltung des Verfahrens wird bei einer Betätigung zumindest einer der Schaltkupplungen eine Relativbewegung in einer Betätigungsrichtung zwischen Hälften dieser Schaltkupplung überwacht, beispielsweise mittels eines Lagesensors oder einer veränderten Zustandsgröße der entsprechenden Aktuatorik. Ein Betrag des über den ersten oder zweiten Drehmomentübertragungspfad übertragenen Drehmoments wird vorzugsweise erhöht, und zwar vorzugsweise rampenartig, wenn die Relativbewegung nicht innerhalb einer vorgegebenen Zeitspanne beginnt, oder wenn diese innerhalb der vorgegebenen Zeitspanne eine definierte Wegstrecke weder erreicht noch überschreitet. Der Betrag vor dieser Erhöhung kann Null sein, bzw. das Minimum eines von der jeweiligen reibschlüssigen Kupplung übertragbaren Drehmoments, sodass die Unterstützung zum Öffnen oder Schließen der Schaltkupplung mittels des zumindest einen Drehmomentübertragungspfades erst dann erfolgt, falls der Betätigungsvorgang ohne diese Unterstützung nicht durchgeführt werden konnte. Alternativ dazu kann der Betrag vor dieser Erhöhung größer Null sein, bzw. größer als das minimal übertragbare Drehmoment der reibschlüssigen Kupplung.

Für das zuvor beschriebene Verfahren und dessen bevorzugten Ausführungen müssen die Übersetzungsverhältnisse des ersten und gegebenenfalls des zweiten Drehmomentübertragungspfades nicht zwingend größer sein als der größte Stufensprung zwischen zwei in einer Gangreihe benachbarten Gänge gleicher Drehrichtung. Sind diese Übersetzungsverhältnisse jedoch derart ausgeführt, so kann die Wirkung der Schaltkupplungsentlastung verbessert werden. Denn die Vergrößerung der Übersetzungsverhältnisse des ersten und gegebenenfalls des zweiten Drehmomentübertragungspfades verlängert sozusagen den Hebel, welcher zur Entlastung der zu betätigenden Schaltkupplung zur Verfügung steht.

Es kann eine Steuereinheit vorgesehen sein, welche zur Steuerung des zuvor beschriebenen Verfahrens und dessen bevorzugten Ausführungen eingerichtet ist. Insbesondere kann es sich dabei um eine elektronische Steuereinheit handeln, welche vorzugsweise mit einer hydraulischen Steuereinheit in Kommunikationsverbindung steht.

Ausführungsbeispiele der Erfindung sind nachfolgend anhand der beigefügten Figuren detailliert beschrieben. Es zeigen:
Fig. 1 eine abstrakte Darstellung eines Getriebes;
Fig. 2 ein Getriebe gemäß einem ersten Ausführungsbeispiel;
Fig. 3 ein Getriebe gemäß einem zweiten und dritten Ausführungsbeispiel;
Fig. 4 ein Schaltschema für die Getriebe gemäß den beiden Ausführungsbeispielen; und
Fig. 5 einen Antriebsstrang für ein Kraftfahrzeug.

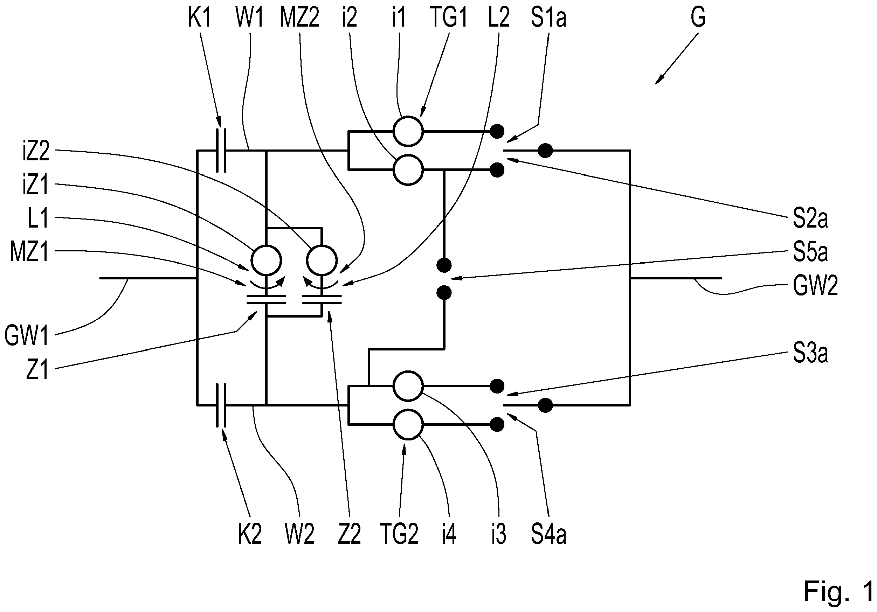

Fig. 1 zeigt eine abstrakte Darstellung eines Getriebes G. Das Getriebe G weist eine Antriebswelle GW1, ein erstes und zweites Teilgetriebe TG1, TG2, unsynchronisierte formschlüssige Schaltkupplungen S1a, S2a, S3a, S4a, S5a und eine Abtriebswelle GW2 auf. Dem ersten Teilgetriebe TG1 ist eine erste Eingangswelle W1 zugeordnet, welche durch Schließen einer ersten Eingangskupplung K1 mit der Antriebswelle GW1 verbindbar ist. Dem zweiten Teilgetriebe TG2 ist eine zweite Eingangswelle W2 zugeordnet, welche durch Schließen einer zweiten Eingangskupplung K2 mit der Antriebswelle GW1 verbindbar ist. Beide Teilgetriebe TG1, TG2 sind ausgangsseitig mit der Abtriebswelle GW2 verbunden.

Dem ersten Teilgetriebe TG1 sind Übersetzungsstufen i1, i2 zugeordnet. Dem zweiten Teilgetriebe TG2 sind Übersetzungsstufen i3, i4 zugeordnet. Die Übersetzungsstufen i1, i2, i3, i4 sind beispielsweise als Stirnradstufen ausgebildet, und weisen voneinander unterschiedliche Übersetzungsverhältnisse auf. Durch selektives Schließen der Schaltkupplungen S1a, S2a, S3a, S4a, S5a und der Eingangskupplungen K1, K2 werden verschiedene Gänge zwischen der Antriebswelle GW1 und der Abtriebswelle GW2 dargestellt. Die Schaltkupplung S5a verbindet die beiden Teilgetriebe TG1, TG2, sodass ein Leistungsfluss von Antriebswelle GW1 zu Abtriebswelle GW2 über Übersetzungsstufen i2, i3 beider Teilgetriebe TG1, TG2 verläuft. Ein derartiger gebildeter Gang wird auch als Windungsgang bezeichnet.

Das Getriebe G weist ferner einen ersten und einen zweiten schaltbaren Drehmomentübertragungspfad L1, L2 zwischen den Eingangswellen W1, W2 auf. Der erste Drehmomentübertragungspfad L1 umfasst eine erste Kupplung Z1 und ein erstes Übersetzungsverhältnis iZ1. Der zweite Drehmomentübertragungspfad L2 umfasst eine zweite Kupplung Z2 und ein zweites Übersetzungsverhältnis iZ2. Die erste Kupplung Z1 und die zweite Kupplung Z2 sind jeweils als reibschlüssige Kupplungen ausgebildet.

Die beiden Drehmomentübertragungspfade L1, L2 dienen zur Synchronisierung der Schaltkupplungen S1a, S2a, S3a, S4a, S5a. Ist beispielsweise die erste Eingangskupplung K1 und die Schaltkupplung S1a geschlossen sowie die zweite Eingangskupplung K2 geöffnet, so kann durch geeignete Ansteuerung der ersten Kupplung Z1 oder der zweiten Kupplung Z2 ein Drehmoment MZ1, MZ2 von der ersten Eingangswelle W1 auf die zweite Eingangswelle W2 übertragen werden, um die zweite Eingangswelle W2 je nach Bedarf auf eine Zieldrehzahl zu beschleunigen oder abzubremsen, um bei geöffneter Eingangskupplung K2 beispielsweise die Schaltkupplung S3a schließen zu können. Die beiden Übersetzungsverhältnisse iZ1, iZ2 sind dabei voneinander unterschiedlich. Beispielhaft dient der erste Drehmomentübertragungspfad L1 zum Beschleunigen der zweiten Eingangswelle W2 im Verhältnis zu einer Drehzahl der ersten Eingangswelle W1, und der zweite Drehmomentübertragungspfad L2 zum Verzögern der zweiten Eingangswelle W2 im Verhältnis zur Drehzahl der ersten Eingangswelle W1. Hat die zweite Eingangswelle W2 ihre Zieldrehzahl erreicht, so kann die Schaltkupplung S3a geschlossen werden. Ein Gangwechsel kann nun durch gleichzeitiges Öffnen der ersten Eingangskupplung K1 und Schließen der zweiten Eingangskupplung K2 erfolgen, ohne die Zugkraft zwischen Antriebswelle GW1 und Abtriebswelle GW2 zu unterbrechen. Die in Fig. 1 angegebenen Pfeilrichtungen der Drehmomente MZ1, MZ2 dienen lediglich zur Illustration, und sind nicht einschränkend.

In gleicher Weise dienen die beiden Drehmomentübertragungspfade L1, L2 zum Beschleunigen oder Abbremsen der ersten Eingangswelle W1 auf eine Zieldrehzahl. Der erste Drehmomentübertragungspfad L1 dient nun zum Verzögern der ersten Eingangswelle W1 im Verhältnis zur Drehzahl der zweiten Eingangswelle W2, und der zweite Drehmomentübertragungspfad L2 dient nun zum Beschleunigen der ersten Eingangswelle W1 im Verhältnis zur Drehzahl der zweiten Eingangswelle W2. Derart können die jeweils zu schließenden Schaltkupplungen S1a, S2a, S3a, S4a, S5a sowohl bei einem Hochschaltvorgang als auch bei einem Rückschaltvorgang synchronisiert werden. Die beiden Drehmomentübertragungspfade L1, L2 dienen hier beispielhaft nicht zur Gangbildung. Bei entsprechender Auslegung der Kupplungen Z1, Z2 kann zumindest einer der Drehmomentübertragungspfade L1, L2 jedoch auch zur Gangbildung verwendet werden.

Einer der beiden Drehmomentübertragungspfade L1, L2 kann gegebenenfalls entfallen. Beispielsweise können einige der Schaltkupplungen S1a, S2a, S3a, S4a, S5a mit einer herkömmlichen Sperrsynchronisierung versehen sein, sodass die Synchronisation bei bestimmten Gangschaltungen auch ohne Nutzung der Drehmomentübertragungspfade L1, L2 erfolgen kann. Alternativ dazu könnte eine elektrische Maschine an einer der Eingangswellen W1, W2 angebunden sein, welche zur Synchronisation eingesetzt werden kann.

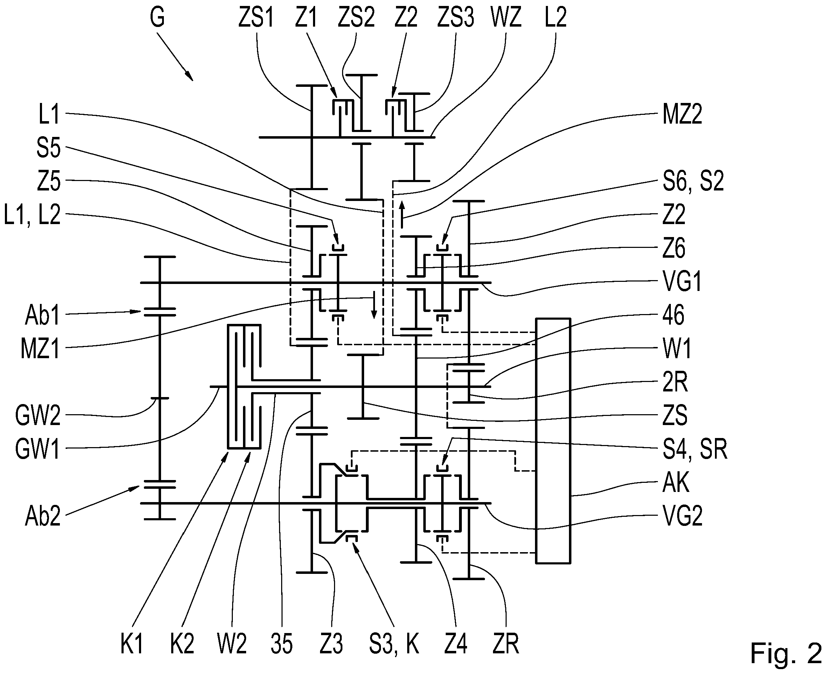

Fig. 2 zeigt ein erstes Ausführungsbeispiel des Getriebes G. Die Eingangskupplungen K1, K2 sind koaxial zueinander angeordnet. Die zweite Eingangswelle W2 ist entsprechend als Hohlwelle ausgebildet, und umschließt die erste Eingangswelle W1 zumindest abschnittsweise. Auf der ersten Eingangswelle W1 sind drei als Festräder ausgeführte Zahnräder ZS, 46, 2R angeordnet. Auf der zweiten Eingangswelle W2 ist ein als Festrad ausgeführtes Zahnrad 35 angeordnet. Das Getriebe G weist zwei Vorgelegewellen VG1, VG2 auf. Auf der ersten Vorgelegewelle VG1 sind drei als Losräder ausgeführte Zahnräder Z5, Z6, Z2 angeordnet. Auf der zweiten Vorgelegewelle VG2 sind drei als Losräder ausgeführte Zahnräder Z3, Z4, ZR angeordnet. Das Getriebe G gemäß dem ersten Ausführungsbeispiel umfasst sieben Schaltkupplungen, welche als S5, S6, S2, S3, S4, SR, K bezeichnet sind. Durch Schließen der Schaltkupplung S5 wird das Losrad 5 mit der ersten Vorgelegewelle VG1 verbunden. Durch Schließen der Schaltkupplung S6 wird das Zahnrad Z6 mit der ersten Vorgelegewelle VG1 verbunden. Durch Schließen der Schaltkupplung S2 wird das Zahnrad Z2 mit der ersten Vorgelegewelle VG1 verbunden. Durch Schließen der Schaltkupplung S3 wird das Zahnrad Z3 mit der zweiten Vorgelegewelle VG2 verbunden. Durch Schließen der Schaltkupplung S4 wird das Zahnrad Z4 mit der zweiten Vorgelegewelle VG2 verbunden. Durch Schließen der Schaltkupplung SR wird das Zahnrad ZR mit der zweiten Vorgelegewelle VG2 verbunden. Durch Schließen der Schaltkupplung K wird das Zahnrad Z3 mit dem Zahnrad Z4 verbunden. Das Betätigen, also das Öffnen und Schließen der Schaltkupplungen S5, S6, S2, S3, S4, SR, K erfolgt durch eine Aktuatorik AK, beispielsweise mittels Schaltstangen. Das Zahnrad 35 kämmt mit den Zahnrädern Z5 und Z3. Das Zahnrad 46 kämmt mit den Zahnrad Z4 und Z6. Das Zahnrad 2R kämmt mit dem Zahnrad Z2 und über ein Fig. 1 nicht dargestelltes Zwischenrad, welches mit dem Zahnrad ZR kämmt. Beide Vorgelegewellen VG1, VG2 sind über Stirnradstufen Ab1, Ab2 mit der Abtriebswelle GW2 verbunden.

Das Getriebe G weist ferner eine weitere Welle WZ auf, welche achsparallel zu den Eingangswellen W1, W2 und achsparallel zu den Vorgelegewellen VG1, VG2 angeordnet ist. Der weiteren Welle sind drei Zahnräder ZS1, ZS2, ZS3 zugeordnet. Das Zahnrad ZS1 ist als Festrad ausgebildet. Die Zahnräder ZS2, ZS3 sind als Losräder ausgebildet. Eine Drehmomentübertragung zwischen Zahnrad ZS2 und der weiteren Welle WZ erfolgt durch Schließen einer ersten Kupplung Z1. Eine Drehmomentübertragung zwischen Zahnrad ZS3 und der weiteren Welle WZ erfolgt durch Schließen einer zweiten Kupplung Z2. Die Kupplungen Z1, Z2 sind koaxial zur weiteren Welle WZ angeordnet.

Die Zahnräder ZS1, ZS2, ZS3 und die Kupplungen Z1, Z2 sind Bestandteil von zwei schaltbaren Drehmomentübertragungspfaden L1, L2 zwischen den beiden Eingangswellen W1, W2. Die beiden Drehmomentübertragungspfade sind durch eine erste Zahnradpaarung, eine zweite Zahnradpaarung und eine dritte Zahnradpaarung gebildet. Die erste Zahnradpaarung ergibt sich durch die Zahnräder 35 und ZS1. Die zweite Zahnradpaarung ergibt sich durch die Zahnräder ZS und ZS2. Die dritte Zahnradpaarung ergibt sich durch die Zahnräder 46 und ZS3. Die Zahnräder 35, ZS1; ZS, ZS2; 46, ZS3 der jeweiligen Zahnradpaarungen kämmen miteinander. Die erste Zahnradpaarung ist Bestandteil beider Drehmomentübertragungspfade L1, L2. Die zweite Zahnradpaarung ist Bestandteil des ersten Drehmomentübertragungspfads L1. Die zweite Zahnradpaarung ist Bestandteil des zweiten Drehmomentübertragungspfads L2.

Das Zahnrad ZS, welches Bestandteil der zweiten Zahnradpaarung und somit des ersten Drehmomentübertragungspfads L1 ist, trägt im Gegensatz zum Zahnrad 35 der ersten Zahnradpaarung und zum Zahnrad 46 der dritten Zahnradpaarung nicht zur Gangbildung bei, sondern dient ausschließlich zur Ausbildung des ersten Drehmomentübertragungspfads L1. Das Zahnrad ZS ist vorzugsweise einteilig mit dem Zahnrad 46 verbunden, und ist axial zwischen den Zahnrädern 35 und 46 angeordnet.

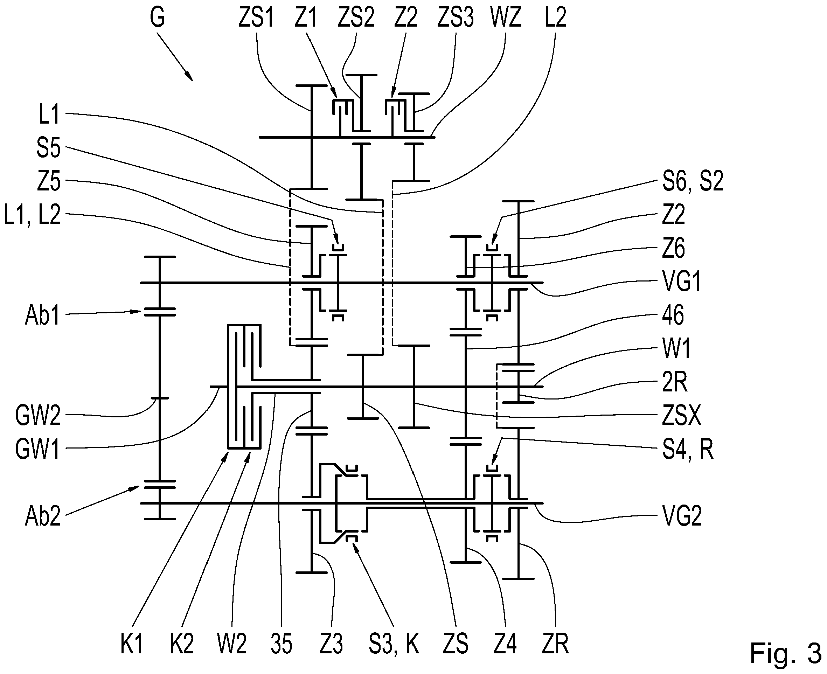

Fig. 3 zeigt ein zweites Ausführungsbeispiel des Getriebes G, welches im Wesentlichen dem in Fig. 2 dargestellten ersten Ausführungsbeispiel entspricht. Das Getriebe G weist nun ein zusätzliches Zahnrad ZSX auf, welches als Festrad der ersten Eingangswelle W1 ausgebildet ist. Das zusätzliche Zahnrad ZSX kämmt anstelle des Zahnrads 46 mit dem Zahnrad ZS3, ist somit Bestandteil des zweiten Drehmomentübertragungspfads L2 und ist an der Gangbildung nicht beteiligt. Das zusätzliche Zahnrad ZSX ist axial zwischen dem Zahnrad ZS und dem Zahnrad 46 angeordnet. Die Aktuatorik AK ist in Fig. 3 der Übersichtlichkeit halber nicht dargestellt.

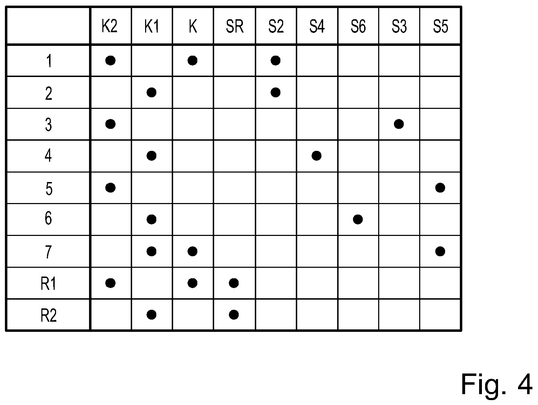

Fig. 4 zeigt eine Schalttabelle, welche für beide Ausführungsbeispiele des Getriebes G anwendbar ist. In den Zeilen des Schaltschemas sind Gänge 1 bis 7, R1, R2 in der Reihenfolge ihrer Gangreihe angeführt. In den Spalten sind die Schaltkupplungen S5, S6, S2, S3, S4, SR, K sowie die Eingangskupplungen K1, K2 angeführt. Kreise bezeichnen den geschlossenen Zustand der Schaltkupplungen S5, S6, S2, S3, S4, SR, K sowie der Eingangskupplungen K1, K2 in Gängen 1 bis 7, R1, R2. Aus dem Schaltschema geht deutlich hervor, dass die beiden Kupplungen Z1, Z2, und somit die beiden Drehmomentübertragungspfade L1, L2 nicht zur Gangbildung des Getriebes G beitragen.

Die Stufensprünge zwischen in der Gangreihe benachbarten Gängen des Getriebes G, also beispielsweise zwischen Gang 1 und Gang 2 oder zwischen Gang 4 und Gang 5 sind vorzugsweise nicht identisch. Beispielsweise ist der Stufensprung zwischen Gang 1 und Gang 2 größer als der Stufensprung zwischen Gang 5 und Gang 6. Eine solche degressive Gangabstufung ist für einen Einsatz im Kraftfahrzeug-Antriebsstrang von Vorteil. Das Übersetzungsverhältnis iZ1, iZ2 zumindest eines, vorzugsweise beider der Drehmomentübertragungspfade L1, L2 ist beispielhaft größer als der größte Stufensprung zwischen in der Gangreihe benachbarten Gängen gleicher Drehrichtung. Gänge gleicher Drehrichtung bezeichnen Gänge, bei denen Antriebswelle GW1 und Abtriebswelle GW2 die gleiche Drehrichtung aufweisen.

Im Folgenden wird das erfindungsgemäße Verfahren anhand einem Beispiel näher beschrieben: in einem Ausgangszustand ist im Getriebe G der Gang 3 eingelegt, wonach die Eingangskupplung K2 sowie die Schaltkupplung S3 geschlossen sind. Zeitgleich ist die Schaltkupplung S2 geschlossen und die Eingangskupplung K1 geöffnet. Nun soll die Schaltkupplung S2 geöffnet und die Schaltkupplung S4 geschlossen werden, um für eine nachfolgende Hochschaltung von Gang 3 in Gang 4 lediglich die Eingangskupplung K2 zu öffnen und die Eingangskupplung K1 schließen zu müssen. Die Schaltkupplung S2 ist jedoch nicht lastfrei, da das Schleppmoment der geöffneten Eingangskupplung K1 über den Lastpfad des Gangs 2 auf die Abtriebswelle GW2 wirkt. Das auf die Schaltkupplung S2 wirkende Schleppmoment wird durch das Übersetzungsverhältnis zwischen dem Zahnrad 2R und dem Zahnrad Z2 zusätzlich vergrößert.

Nun kann beispielsweise die reibschlüssige Kupplung Z2 betätigt werden, sodass über den Drehmomentübertragungspfad L2 ein Drehmoment MZ2 übertragen wird. Durch das Übersetzungsverhältnis iZ2 des Drehmomentübertragungspfads L2 wirkt das Drehmoment MZ2 dem Schleppmoment an der Eingangskupplung K1 entgegen, sodass die Drehmomentbelastung an der noch geschlossenen Schaltkupplung S2 reduziert wird. Nun kann die Schaltkupplung S2 mit geringem Kraftaufwand durch die Aktuatorik AK geöffnet werden. Bei hinreichend genauer Steuerung und ausreichend großem Übersetzungsverhältnis iZ2 kann die Schaltkupplung S2 durch Betätigung der reibschlüssigen Kupplung Z2 sogar vollständig lastfrei gestellt werden.

Abhängig von dem Vorzeichen des Drehmoments, welches an der zu öffnenden Schaltkupplung wirkt, wird die erste oder die zweite reibschlüssige Kupplung Z1, Z2 betätigt. Durch die unterschiedlichen Übersetzungsverhältnisse iZ1, iZ2 der Drehmomentübertragungspfade L1, L2 kann die Belastung der zu öffnenden Schaltkupplung entsprechend reduziert werden. In gleicher Weise kann einer der Drehmomentübertragungspfade L1, L2 dazu verwendet werden, die Belastung einer zu schließenden Schaltkupplung zu reduzieren.

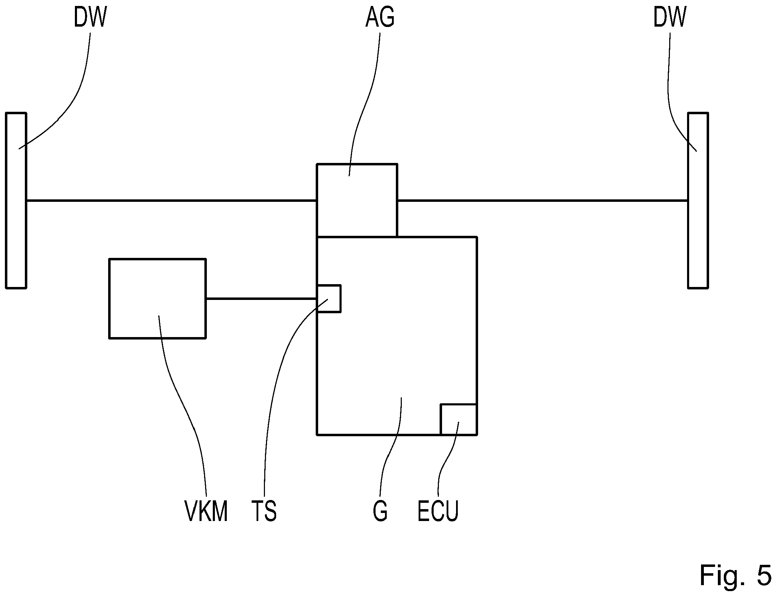

Fig. 5 zeigt einen Antriebsstrang für ein Kraftfahrzeug. wobei eine Verbrennungskraftmaschine VKM über einen zwischenliegenden Torsionsschwingungsdämpfer TS mit dem Getriebe G verbunden ist. Dem Getriebe G ist abtriebsseitig ein Differentialgetriebe AG nachgeschaltet, über welches eine Antriebsleistung auf Antriebsräder DW einer Antriebsachse des Kraftfahrzeuges verteilt wird. Das Getriebe G und der Torsionsschwingungsdämpfer TS sind dabei in einem gemeinsamen Gehäuse des Getriebes G angeordnet, in welches dann auch das Differentialgetriebe AG integriert sein kann. Wie zudem in Fig. 5 zu erkennen ist, sind die Verbrennungskraftmaschine VKM, der Torsionsschwingungsdämpfer TS, das Getriebe G und auch das Differentialgetriebe AG quer zu einer Fahrtrichtung des Kraftfahrzeuges ausgerichtet.

Das Getriebe G umfasst eine Steuereinheit ECU, welche zumindest zur Steuerung der Aktuatorik AK und zur Steuerung der reibschlüssigen Kupplungen Z1, Z2 eingerichtet ist. Auf der Steuereinheit ECU kann ein Kennfeld hinterlegt sein, welches zur Steuerung der reibschlüssigen Kupplungen Z1, Z2 zur Anwendung kommt.

### Bezugszeichen

- G: Getriebe
- GW1: Antriebswelle
- GW2: Abtriebswelle
- TG1: Erstes Teilgetriebe
- TG2: Zweites Teilgetriebe
- K1: Erste Eingangskupplung
- K2: Zweite Eingangskupplung
- S1a-S5a: Schaltkupplungen
- i1-i4: Übersetzungsstufen
- S2-S6, SR, K: Schaltkupplungen
- VG1, VG2: Vorgelegewellen
- L1, L2: Drehmomentübertragungspfade
- iZ1, iZ2: Übersetzungsverhältnisse der Drehmomentübertragungspfade
- Z1, Z2: Reibschlüssige Kupplungen
- MZ1, MZ2: Drehmoment
- Z2-Z6, ZR: Zahnräder
- 35, 46, 2R: Zahnräder
- ZS: Zahnrad
- ZSX: Zusätzliches Zahnrad
- ZS1, ZS2, ZS3: Zahnräder
- WZ: Weitere Welle
- Ab1, Ab2: Stirnradstufen
- 1-7, R1, R2: Gänge
- ECU: Steuereinheit
- AK: Aktuatorik
- VKM: Verbrennungskraftmaschine
- TS: Torsionsschwingungsdämpfer
- AG: Differentialgetriebe
- DW: Antriebsrad

## Patentansprüche

1. Getriebe (G) für ein Kraftfahrzeug, wobei das Getriebe (G) eine Antriebswelle (GW1), eine über eine erste Eingangskupplung (K1) mit der Antriebswelle (GW1) verbindbare erste Eingangswelle (W1), eine über eine zweite Eingangskupplung (K2) mit der Antriebswelle (GW1) verbindbare zweite Eingangswelle (W2), eine Mehrzahl von Schaltkupplungen (S1a, S2a, S3a, S4a, S5a; S2, S3, S4, S5, S6, SR, K) sowie eine Abtriebswelle (GW2) aufweist,
- wobei durch selektive Betätigung der Schaltkupplungen (S5, S6, S2, S3, S4, SR, K) und der Eingangskupplungen (K1, K2) verschiedene Gänge (1 bis 7, R1, R2) zwischen der Antriebswelle(GW1) und der Abtriebswelle (GW2) darstellbar sind,
- wobei zumindest ein erster, mittels einer reibschlüssigen Kupplung (Z1) schaltbarer Drehmomentübertragungspfad (L1) zwischen der ersten Eingangswelle (W1) und der zweiten Eingangswelle (W2) vorgesehen ist,
**dadurch gekennzeichnet, dass** ein Übersetzungsverhältnis (iZ1) des ersten Drehmomentübertragungspfads (L1) zwischen den Eingangswellen (W1, W2) größer ist als der größte Stufensprung zwischen zwei in einer Gangreihe benachbarten Gänge (1 bis 7) gleicher Drehrichtung.

2. Getriebe (G) nach Anspruch 1, **dadurch gekennzeichnet, dass** ein zweiter, mittels einer weiteren reibschlüssigen Kupplung (Z2) schaltbarer Drehmomentübertragungspfad (L2) zwischen der ersten Eingangswelle (W1) und der zweiten Eingangswelle (W2) vorgesehen ist, wobei ein Übersetzungsverhältnis (iZ2) des zweiten Drehmomentübertragungspfads (L2) zwischen den Eingangswellen (W1, W2) größer ist als der größte Stufensprung zwischen zwei in der Gangreihe benachbarten Gänge (1 bis 7) gleicher Drehrichtung.

3. Getriebe (G) nach Anspruch 1 oder Anspruch 2, **dadurch gekennzeichnet, dass** zumindest ein Teil der Schaltkupplungen (S1a, S2a, S3a, S4a, S5a; S2, S3, S4, S5, S6, SR, K) als unsynchronisierte, formschlüssige Schaltelemente ausgebildet sind.

4. Antriebsstrang für ein Kraftfahrzeug, **gekennzeichnet durch** ein Getriebe (G) gemäß einem der Ansprüche 1 bis 3.

5. Verfahren zum Betrieb eines Getriebes (G) für ein Kraftfahrzeug, wobei das Getriebe (G) eine Antriebswelle (GW1), eine über eine erste Eingangskupplung (K1) mit der Antriebswelle (GW1) verbindbare erste Eingangswelle (W1), eine über eine zweite Eingangskupplung (K2) mit der Antriebswelle (GW1) verbindbare zweite Eingangswelle (W2), eine Mehrzahl von Schaltkupplungen (S1a, S2a, S3a, S4a, S5a; S2, S3, S4, S5, S6, SR, K) sowie eine Abtriebswelle (GW2) aufweist,
- wobei durch selektive Betätigung der Schaltkupplungen (S1a, S2a, S3a, S4a, S5a; S2, S3, S4, S5, S6, SR, K) und der Eingangskupplungen (K1, K2) verschiedene Gänge (1 bis 7, R1, R2) zwischen der Antriebswelle (GW1) und der Abtriebswelle (GW2) darstellbar sind,
- wobei zumindest ein erster, mittels einer reibschlüssigen Kupplung (Z1) schaltbarer Drehmomentübertragungspfad (L1) zwischen der ersten Eingangswelle (W1) und der zweiten Eingangswelle (W2) vorgesehen ist,
**dadurch gekennzeichnet, dass** gleichzeitig zu einer Ansteuerung einer Aktuatorik (AK) zum Öffnen zumindest einer der Schaltkupplungen (S1a, S2a, S3a, S4a, S5a; S2, S3, S4, S5, S6, SR, K) die reibschlüssige Kupplung (Z1) zur Übertragung eines Drehmoments (MZ1) zwischen den Eingangswellen (W1, W2) betätigt wird, sodass ein zwischen Hälften der zu öffnenden Schaltkupplung (S1a, S2a, S3a, S4a, S5a; S2, S3, S4, S5, S6, SR, K) wirkendes Drehmoment reduziert wird.

6. Verfahren nach Anspruch 5, **dadurch gekennzeichnet, dass** ein zweiter, mittels einer weiteren reibschlüssigen Kupplung (Z2) schaltbarer Drehmomentübertragungspfad (L2) zwischen der ersten Eingangswelle (W1) und der zweiten Eingangswelle (W2) vorgesehen ist, wobei gleichzeitig zu einer Ansteuerung zum Öffnen der zu öffnenden Schaltkupplung (S1a, S2a, S3a, S4a, S5a; S2, S3, S4, S5, S6, SR, K) eine der beiden reibschlüssigen Kupplungen (Z1, Z2) zur Übertragung eines Drehmoments (MZ1, MZ2) zwischen den Eingangswellen (W1, W2) betätigt wird, sodass ein zwischen den Hälften der zu öffnenden Schaltkupplung (S1a, S2a, S3a, S4a, S5a; S2, S3, S4, S5, S6, SR, K) wirkendes Drehmoment reduziert wird.

7. Verfahren nach Anspruch 5 oder Anspruch 6, **dadurch gekennzeichnet, dass** eine der reibschlüssigen Kupplungen (Z1, Z2) derart betätigt wird, dass die zu öffnende Schaltkupplung (S1a, S2a, S3a, S4a, S5a; S2, S3, S4, S5, S6, SR, K) lastfrei wird.

8. Verfahren nach einem der Ansprüche 5 bis 7, **dadurch gekennzeichnet, dass** eine der reibschlüssigen Kupplung (Z1, Z2) bei einer Ansteuerung zum Schließen zumindest einer der Schaltkupplungen (S1a, S2a, S3a, S4a, S5a; S2, S3, S4, S5, S6, SR, K) zur Übertragung eines Drehmoments (MZ1, MZ2) zwischen den Eingangswellen (W1, W2) betätigt wird, sodass ein zwischen Hälften der zu schließenden Schaltkupplung (S1a, S2a, S3a, S4a, S5a; S2, S3, S4, S5, S6, SR, K) wirkendes Drehmoment reduziert wird.

9. Verfahren nach einem der Ansprüche 5 bis 8, **dadurch gekennzeichnet, dass** das von der reibschlüssigen Kupplung (Z1, Z2) zu übertragende Drehmoment (MZ1, MZ2) aus einem Kennfeld bestimmt wird.

10. Verfahren nach Anspruch 9, **dadurch gekennzeichnet, dass** das Kennfeld während des Betriebs des Getriebes (G) adaptiert wird.

11. Verfahren nach Anspruch 10, **dadurch gekennzeichnet, dass** die Adaption des Kennfelds außerhalb von Schaltvorgängen des Getriebes (G) erfolgt.

12. Verfahren nach einem der Ansprüche 5 bis 11, **dadurch gekennzeichnet, dass** bei einer Betätigung zumindest einer der Schaltkupplungen (S1a, S2a, S3a, S4a, S5a; S2, S3, S4, S5, S6, SR, K) eine Relativbewegung in einer Betätigungsrichtung zwischen Hälften dieser Schaltkupplung (S1a, S2a, S3a, S4a, S5a; S2, S3, S4, S5, S6, SR, K) überwacht wird, wobei ein Betrag des Drehmoments (MZ1, MZ2), welches von der jeweils betätigten reibschlüssigen Kupplung (Z1, Z2) übertragen wird, dann erhöht wird, wenn die Relativbewegung nicht innerhalb einer vorgegebenen Zeitspanne beginnt oder eine definierte Wegstrecke weder erreicht noch überschreitet.

13. Verfahren nach Anspruch 12, dass die Erhöhung des Betrags des Drehmoments (MZ1, MZ2) rampenförmig erfolgt.

14. Verfahren nach einem der Ansprüche 5 bis 13, **dadurch gekennzeichnet dass** ein Übersetzungsverhältnis (iZ1, iZ2) einer der Drehmomentübertragungspfad e(L1, L2) zwischen den Eingangswellen (W1, W2) größer ist als der größte Stufensprung zwischen zwei in einer Gangreihe benachbarten Gänge (1 bis 7) gleicher Drehrichtung.

15. Steuereinheit (ECU) für ein Kraftfahrzeuggetriebe (G), **dadurch gekennzeichnet, dass** die Steuereinheit (ECU) zur Steuerung des Verfahrens nach einem der Ansprüche 5 bis 14 eingerichtet ist.

## Claims

1. Transmission (G) for a motor vehicle, wherein the transmission (G) has a drive shaft (GW1), a first input shaft (W1) which is connectable by means of a first input clutch (K1) to the drive shaft (GW1), a second input shaft (W2) which is connectable by means of a second input clutch (K2) to the drive shaft (GW1), a multiplicity of shift clutches (Sla, S2a, S3a, S4a, S5a; S2, S3, S4, S5, S6, SR, K), and an output shaft (GW2),
- wherein, by selective actuation of the shift clutches (S5, S6, S2, S3, S4, SR, K) and of the input clutches (K1, K2), different gear ratios (1 to 7, R1, R2) between the drive shaft (GW1) and the output shaft (GW2) can be realized,
- wherein at least one first torque-transmitting path (L1), which can be selected by means of a frictionally engaging clutch (Z1), between the first input shaft (W1) and the second input shaft (W2) is provided, **characterized in that** a transmission ratio (iZ1) of the first torque-transmitting path (L1) between the input shafts (W1, W2) is higher than the largest gradation between two gear ratios (1 to 7) of the same direction of rotation which are adjacent in a gear ratio series.

2. Transmission (G) according to Claim 1, **characterized in that** a second torque-transmitting path (L2), which can be selected by means of a further frictionally engaging clutch (Z2), between the first input shaft (W1) and the second input shaft (W2) is provided, wherein a transmission ratio (iZ2) of the second torque-transmitting path (L2) between the input shafts (W1, W2) is higher than the largest gradation between two gear ratios (1 to 7) of the same direction of rotation which are adjacent in a gear ratio series.

3. Transmission (G) according to Claim 1 or Claim 2, **characterized in that** at least a proportion of the shift clutches (Sla, S2a, S3a, S4a, S5a; S2, S3, S4, S5, S6, SR, K) are in the form of non-synchronized positively locking shift elements.

4. Drivetrain for a motor vehicle, **characterized by** a transmission (G) according to any of Claims 1 to 3.

5. Method for operating a transmission (G) for a motor vehicle, wherein the transmission (G) has a drive shaft (GW1), a first input shaft (W1) which is connectable by means of a first input clutch (K1) to the drive shaft (GW1), a second input shaft (W2) which is connectable by means of a second input clutch (K2) to the drive shaft (GW1), a multiplicity of shift clutches (Sla, S2a, S3a, S4a, S5a; S2, S3, S4, S5, S6, SR, K), and an output shaft (GW2),
- wherein, by selective actuation of the shift clutches (Sla, S2a, S3a, S4a, S5a; S2, S3, S4, S5, S6, SR, K) and of the input clutches (K1, K2), different gear ratios (1 to 7, R1, R2) between the drive shaft (GW1) and the output shaft (GW2) can be realized,
- wherein at least one first torque-transmitting path (L1), which can be selected by means of a frictionally engaging clutch (Z1), between the first input shaft (W1) and the second input shaft (W2) is provided, **characterized in that**, at the same time as an activation of an actuator arrangement (AK) for opening at least one of the shift clutches (Sla, S2a, S3a, S4a, S5a; S2, S3, S4, S5, S6, SR, K), the frictionally engaging clutch (Z1) is actuated for the transmission of a torque (MZ1) between the input shafts (W1, W2), such that a torque acting between halves of the shift clutch (Sla, S2a, S3a, S4a, S5a; S2, S3, S4, S5, S6, SR, K) to be opened is reduced.

6. Method according to Claim 5, **characterized in that** a second torque-transmitting path (L2), which can be selected by means of a further frictionally engaging clutch (Z2), between the first input shaft (W1) and the second input shaft (W2) is provided, wherein, at the same time as an activation for opening the shift clutch (Sla, S2a, S3a, S4a, S5a; S2, S3, S4, S5, S6, SR, K) to be opened, one of the two frictionally engaging clutches (Z1, Z2) is actuated for the transmission of a torque (MZ1, MZ2) between the input shafts (W1, W2), such that a torque acting between the halves of the shift clutch (Sla, S2a, S3a, S4a, S5a; S2, S3, S4, S5, S6, SR, K) to be opened is reduced.

7. Method according to Claim 5 or Claim 6, **characterized in that** one of the frictionally engaging clutches (Z1, Z2) is actuated such that the shift clutch (Sla, S2a, S3a, S4a, S5a; S2, S3, S4, S5, S6, SR, K) to be opened is rendered free from load.

8. Method according to any of Claims 5 to 7, **characterized in that** one of the frictionally engaging clutch (Z1, Z2) is, in the event of an actuation for closing at least one of the shift clutches (Sla, S2a, S3a, S4a, S5a; S2, S3, S4, S5, S6, SR, K), actuated for the transmission of a torque (MZ1, MZ2) between the input shafts (W1, W2) such that a torque acting between halves of the shift clutch (Sla, S2a, S3a, S4a, S5a; S2, S3, S4, S5, S6, SR, K) to be closed is reduced.

9. Method according to any of Claims 5 to 8, **characterized in that** the torque (MZ1, MZ2) to be transmitted by the frictionally engaging clutch (Z1, Z2) is determined from a characteristic map.

10. Method according to Claim 9, **characterized in that** the characteristic map is adapted during the operation of the transmission (G).

11. Method according to Claim 10, **characterized in that** the adaptation of the characteristic map is performed outside shift processes of the transmission (G).

12. Method according to any of Claims 5 to 11, **characterized in that**, in the event of an actuation of at least one of the shift clutches (Sla, S2a, S3a, S4a, S5a; S2, S3, S4, S5, S6, SR, K), a relative movement in an actuating direction between halves of said shift clutch (Sla, S2a, S3a, S4a, S5a; S2, S3, S4, S5, S6, SR, K) is monitored, wherein a magnitude of the torque (MZ1, MZ2) which is transmitted by the respectively actuated frictionally engaging clutch (Z1, Z2) is increased if the relative movement does not begin within a predefined time period or neither attains nor overshoots a defined distance.

13. Method according to Claim 12, **characterized in that** the increase of the magnitude of the torque (MZ1, MZ2) is performed in a ramped manner.

14. Method according to any of Claims 5 to 13, **characterized in that** a transmission ratio (iZ1, iZ2) of one of the torque-transmitting paths (L1, L2) between the input shafts (W1, W2) is higher than the largest gradation between two gear ratios (1 to 7) of the same direction of rotation which are adjacent in a gear ratio series.

15. Control unit (ECU) for a motor vehicle transmission (G), **characterized in that** the control unit (ECU) is configured for controlling the method according to any of Claims 5 to 14.

## Revendications

1. Transmission (G) destinée à un véhicule automobile, la transmission (G) comportant un arbre d'entraînement (GW1), un premier arbre d'entrée (W1) qui peut être relié à l'arbre d'entraînement (GW1) par le biais d'un premier embrayage d'entrée (K1), un deuxième arbre d'entrée (W2) qui peut être relié à l'arbre d'entraînement (GW1) par le biais d'un deuxième embrayage d'entrée (K2), une pluralité d'embrayages (Sla, S2a, S3a, S4a, S5a ; S2, S3, S4, S5, S6, SR, K) et un arbre de sortie (GW2),
- différents rapports de vitesse (1 à 7, R1, R2) entre l'arbre d'entraînement (GW1) et l'arbre de sortie (GW2) pouvant être obtenus par actionnement sélectif des embrayages (S5, S6, S2, S3, S4, SR, K) et des embrayages d'entrée (K1, K2),
- au moins un premier chemin de transmission de couple (L1) commutable au moyen d'un embrayage à friction (Z1) étant prévu entre le premier arbre d'entrée (W1) et le deuxième arbre d'entrée (W2), **caractérisée en ce qu'**un rapport de transmission (iZ1) du premier chemin de transmission de couple (L1) entre les arbres d'entrée (W1, W2) est supérieur au plus grand écart entre deux rapports de vitesse (1 à 7) de même sens de rotation qui sont adjacents dans une rangée de rapports de vitesse.

2. Transmission (G) selon la revendication 1, **caractérisée en ce qu'**un deuxième chemin de transmission de couple (L2) commutable au moyen d'un autre embrayage à friction (Z2) est prévu entre le premier arbre d'entrée (W1) et le deuxième arbre d'entrée (W2), un rapport de transmission (iZ2) du deuxième chemin de transmission de couple (L2) entre les arbres d'entrée (W1, W2) étant supérieur au plus grand écart entre deux rapports de vitesse (1 à 7) de du même sens de rotation qui sont adjacents dans la rangée de rapports de vitesse.

3. Transmission (G) selon la revendication 1 ou la revendication 2, **caractérisée en ce qu'**au moins une partie des embrayages (Sla, S2a, S3a, S4a, S5a ; S2, S3, S4, S5, S6, SR, K) sont conçus comme des éléments de commutation à complémentarité de formes non synchronisés.

4. Chaîne cinématique pour véhicule automobile, **caractérisée par** une transmission (G) selon l'une des revendications 1 à 3.

5. Procédé de fonctionnement d'une transmission (G) destinée à un véhicule automobile, la transmission (G) comportant un arbre d'entraînement (GW1), un premier arbre d'entrée (W1) qui peut être relié à l'arbre d'entraînement (GW1) par le biais d'un premier embrayage d'entrée (K1), un deuxième arbre d'entrée (W2) qui peut être relié à l'arbre d'entraînement (GW1) par le biais d'un deuxième embrayage d'entrée (K2), une pluralité d'embrayages (Sla, S2a, S3a, S4a, S5a ; S2, S3, S4, S5, S6, SR, K) et un arbre de sortie (GW2),
- différents rapports de vitesse (1 à 7, R1, R2) entre l'arbre d'entraînement (GW1) et l'arbre de sortie (GW2) pouvant être obtenus par actionnement sélectif des embrayages (Sla, S2a, S3a, S4a, S5a ; S2, S3, S4, S5, S6, SR, K) et des embrayages d'entrée (K1, K2),
- au moins un premier chemin de transmission de couple (L1) commutable au moyen d'un embrayage à friction (Z1) étant prévu entre le premier arbre d'entrée (W1) et le deuxième arbre d'entrée (W2), **caractérisé en ce que** l'embrayage à friction (Z1) est actionné simultanément à une commande d'un système d'actionneur (AK) destiné à ouvrir l'un au moins des embrayages (S1a, S2a, S3a, S4a, S5a ; S2, S3, S4, S5, S6, SR, K) afin de transmettre un couple (MZ1) entre les arbres d'entrée (W1, W2), de façon à réduire le couple d'actionnement agissant entre les moitiés de l'embrayage (S1a, S2a, S3a, S4a, S5a ; S2, S3, S4, S5, S6, SR, K) à ouvrir.

6. Procédé selon la revendication 5, **caractérisé en ce qu'**un deuxième chemin de transmission de couple (L2), commutable au moyen d'un autre embrayage à friction (Z2), est prévu entre le premier arbre d'entrée (W1) et le deuxième arbre d'entrée (W2), l'un des deux embrayages à friction (Z1, Z2) étant actionné simultanément à une commande destinée à ouvrir l'un au moins des embrayages (Sla, S2a, S3a, S4a, S5a ; S2, S3, S4, S5, S6, SR, K) à ouvrir afin de transmettre un couple (MZ1, MZ2) entre les arbres d'entrée (W1, W2), de façon à réduire le couple d'actionnement agissant entre les moitiés de l'embrayage (Sla, S2a, S3a, S4a, S5a ; S2, S3, S4, S5, S6, SR, K) à ouvrir.

7. Procédé selon la revendication 5 ou la revendication 6, **caractérisé en ce que** l'un des embrayages à friction (Z1, Z2) est actionné de telle sorte que l'embrayage (Sla, S2a, S3a, S4a, S5a ; S2, S3, S4, S5, S6, SR, K) à ouvrir devienne sans charge.

8. Procédé selon l'une des revendications 5 à 7, **caractérisé en ce que** l'un des embrayage à friction (Z1, Z2) est actionné lors d'une commande pour fermer l'un au moins des embrayages (Sla, S2a, S3a, S4a, S5a ; S2, S3, S4, S5, S6, SR, K) afin de transmettre un couple (MZ1, MZ2) entre les arbres d'entrée (W1, W2) de façon à réduire le couple d'actionnement agissant entre les moitiés de l'embrayage (Sla, S2a, S3a, S4a, S5a ; S2, S3, S4, S5, S6, SR, K) à ouvrir.

9. Procédé selon l'une des revendications 5 à 8, **caractérisé en ce que** le couple (MZ1, MZ2) à transmettre par l'embrayage à friction (Z1, Z2) est déterminé à partir d'un diagramme caractéristique.

10. Procédé selon la revendication 9, **caractérisé en ce que** le diagramme caractéristique est adapté pendant le fonctionnement de la transmission (G).

11. Procédé selon la revendication 10, **caractérisé en ce que** l'adaptation du diagramme caractéristique est effectuée en dehors des processus de commutation de la transmission (G).

12. Procédé selon l'une des revendications 5 à 11, **caractérisé en ce que**, lors de l'actionnement de l'un au moins des embrayages (Sla, S2a, S3a, S4a, S5a ; S2, S3, S4, S5, S6, SR, K), un mouvement relatif dans une direction d'actionnement entre les moitiés de cet embrayage (S1a, S2a, S3a, S4a, S5a ; S2, S3, S4, S5, S6, SR, K) est surveillée, une valeur du couple (MZ1, MZ2), qui est transmis par l'embrayage à friction (Z1, Z2) actionné à chaque fois, est augmentée seulement si le mouvement relatif ne commence pas dans un intervalle de temps prédéterminé ou n'atteint ni ne dépasse une distance définie.

13. Procédé selon la revendication 12, selon lequel l'augmentation de la valeur du couple (MZ1, MZ2) est accélérée.

14. Procédé selon l'une des revendications 5 à 13, **caractérisé en ce qu'**un rapport de transmission (iZ1, iZ2) de l'un des chemins de transmission de couple (L1, L2) entre les arbres d'entrée (W1, W2) est supérieur au plus grand écart entre deux rapports de vitesse (1 à 7) de même sens de rotation qui sont adjacents dans une rangée rapports de vitesses.

15. Unité de commande (ECU) destinée à une transmission de véhicule automobile (G), **caractérisée en ce que** l'unité de commande (ECU) est conçue pour commander le procédé selon l'une des revendications 5 à 14.
